# EUROPÄISCHE PATENTSCHRIFT

(11) **EP 2 447 553 B1**
(45) Veröffentlichungstag und Bekanntmachung des Hinweises auf die Patenterteilung: **12.03.2014**
(21) Anmeldenummer: 11005670.2
(22) Anmeldetag: 12.07.2011
(51) Int. Cl.: F16C 13/00, D21G 1/02

(54) **Durchbiegungseinstellwalze**
Controlled deflection roll
Rouleau à réglage de flexion

(30) Priorität: 30.10.2010 DE 202010014965 U
(43) Veröffentlichungstag der Anmeldung: 02.05.2012
(73) Patentinhaber: Andritz Küsters GmbH, 47805 Krefeld (DE)
(72) Erfinder: Spoerer, Walter, 41751 Viersen (DE); Schneider, Sergej, 4o215 Düsseldorf (DE)
(74) Vertreter: Sparing Röhl Henseler

(56) Entgegenhaltungen:
- EP-B1- 1 561 959
- DE-A1-102005 022 065
- DE-C1- 4 012 805
- DE-C1- 19 600 078

## Beschreibung

Die Erfindung betrifft eine Durchbiegungseinstellwalze nach dem Oberbegriff des Anspruchs 1.

Durchbiegungseinstellwalzen mit einer Vorrichtung zum Sammeln und Abführen von Öl aus dem Walzeninneren sind bekannt beispielsweise aus DE 27 54 380 C3, DE 199 03 843 C1, EP 1 561 959 B1 und EP 0 225 827 B1. Die bekannten Vorrichtungen haben allesamt den Nachteil, dass diese im Betrieb der Walze mit dem Träger bzw. dem Querhaupt verbogen werden und dann nicht mehr mit dem Walzenrohr fluchten. Das kann dazu führen, dass das Rakel nicht mehr richtig zum Walzenmantelinnenumfang ausgerichtet ist. Das Rakel kann dann das (OI nicht mehr wirksam abstreifen und dadurch kein Druck mehr aufgebaut werden, um das Öl aus dem Walzeninneren abzuführen. Im schlimmsten Fall kann die Befestigung der Flüssigkeitsrückführung am Träger sogar abreißen.

Aus DE 40 12 805 C1 ist eine Walze bekannt, die ein Querhaupt aufweist, an dem ein Fußteil an dessen Enden mittels Zapfen fixiert ist. Auf dem Fußteil ist eine Reihe von Stützelementen vorgesehen, die mit einem Stützglied gegen einen Innenumfang der Hohlwalze anliegen. Dadurch wird erreicht, dass das Querhaupt sich bei entsprechender Belastung unter dem Fußteil hinweg durchbiegen kann.

Aufgabe der Erfindung ist es daher, eine Durchbiegungseinstellwalze zu schaffen, bei der die Flüssigkeitsrückführung ein Rakel aufweist, das verschleißfest ist und ein sicheres Abrakeln von Öl vom Walzenmantelinnenumfang erlaubt.

Diese Aufgabe wird durch die Merkmale des Anspruchs 1 gelöst.

Hierdurch wird eine Durchbiegungseinstellwalze geschaffen, die eine Flüssigkeitsrückführung aufweist, deren Rakel von der Durchbiegung des Trägers weitgehend unabhängig ist. Das Rakel ist nur im Bereich seiner endseitigen Abschnitte am Träger befestigt. Eine solche seitliche Befestigung führt dazu, dass das Rakel dann quasi in der neutralen Phase der Walze verbleibt. Dadurch bleiben die Geometrien zwischen Träger und dem Walzenmantelinnenumfang über die gesamte Länge gleich, unabhängig davon, wie weit sich das Querhaupt durchbiegt.

Vorzugsweise ist die Flüssigkeitsrückführung über den Ölrückführkasten an dem Träger befestigt. Dieser Ölrückführkasten wird durch die erfindungsgemäße Befestigung nicht von dem Träger mit verbogen, wenn dieser unter Last eine Verbiegung erfährt.

Weitere Ausgestaltungen der Erfindung sind der nachfolgenden Beschreibung und den Unteransprüchen zu entnehmen.

Die Erfindung wird nachstehend anhand des in den Abbildungen dargestellten Ausführungsbeispiels näher erläutert.
Fig. 1 zeigt schematisch einen Schnitt durch eine Durchbiegungseinstellwalze mit einer Flüssigkeitsrückführung und einer Gegenwalze;
Fig. 2 zeigt schematisch eine Endabdichtung eines Ölrückführkastens der Flüssigkeitsrückführung;
Fig. 3 zeigt schematisch eine Draufsicht der Flüssigkeitsrückführung mit Öffnungen zur Ölableitung;
Fig. 4 zeigt schematisch einen Längsschnitt der Durchbiegungseinstellwalze mit geradem Träger bei geöffnetem Nip zur Gegenwalze;
Fig. 5 zeigt schematisch einen Längsschnitt der Durchbiegungseinstellwalze mit gebogenem Träger bei geschlossenem und belastetem Nip zur Gegenwalze.

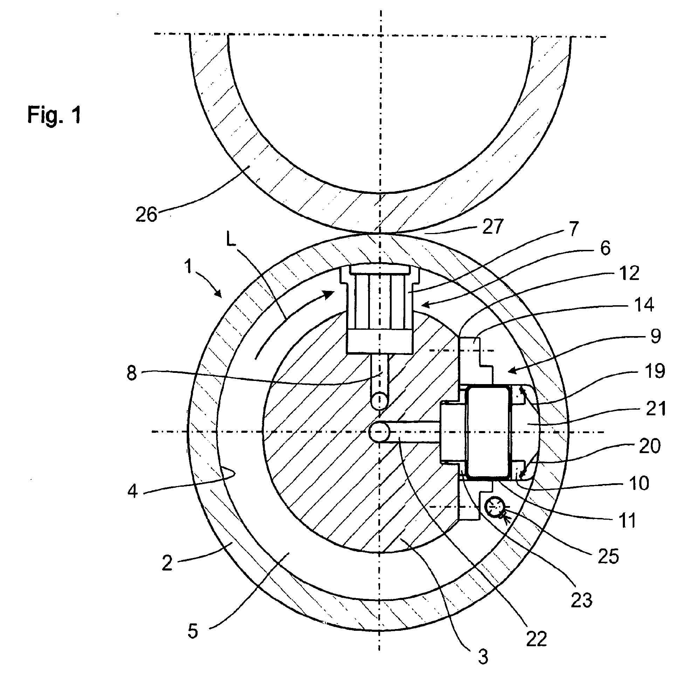

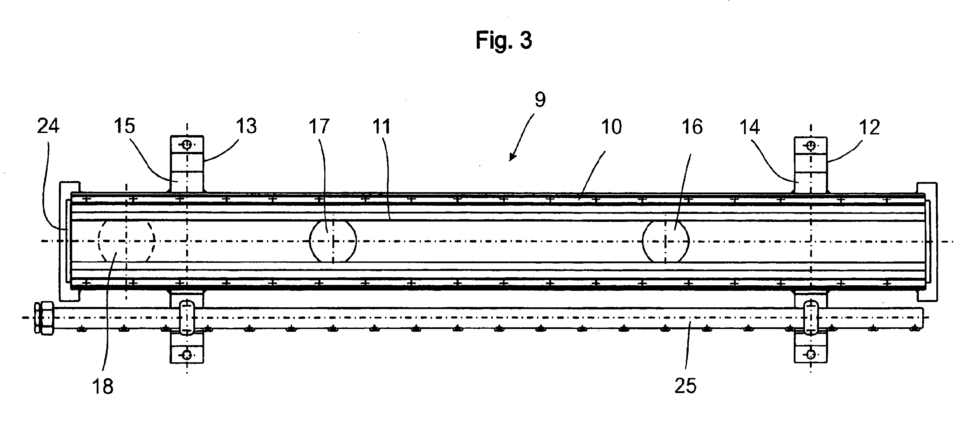

Die Fig. 1 bis Fig. 5 zeigen eine Durchbiegungseinstellwalze 1 mit einem drehbaren Walzenmantel 2, der von einem feststehenden Träger 3 durchsetzt ist. Der Walzenmantel 2 ist als Walzenrohr oder Walzenschale ausgebildet. Der Länge nach wird der Walzenmantel 2 von einem stillstehenden Querhaupt, dem feststehenden Träger 3, durchsetzt, der einen Abstand zum Innenumfang 4 des Walzenmantels 2 belässt. Der Walzenmantel 2 umgibt einen Ringraum 5, in dem der Träger 3 angeordnet ist.

Zwischen dem Träger 3 und dem Walzenmantel 2 ist eine hydraulische Lageranordnung 6 zum Abstützen des Walzenmantels 2 längs mindestens eines Wirkbereiches angeordnet. Die Abstützung an dem Innenumfang 4 des Walzenmantels 2 erfolgt hydrostatisch. Die Lageranordnung 6 umfasst vorzugsweise einzelne entlang einer Walzenlänge axial nebeneinander angeordnete Lagerelemente, die jeweils ein radial bewegbares Kraftelement 7 aufweisen zur Übertragung steuerbarer Elementdrücke auf die innere Mantelumfangsfläche 4 des Walzenmantels 2.

Eine Flüssigkeitsversorgung 8 führt der Lageranordnung 6 Druck- und/oder Schmierflüssigkeit zu. An dem Träger 3 ist ferner eine Flüssigkeitsrückführung 9 angeordnet, die mindestens ein dem Walzenmantelinnenumfang 4 benachbartes Rakel 10 und einen die abgestreifte Flüssigkeit aufnehmenden Ölrückführkasten 11 aufweist.

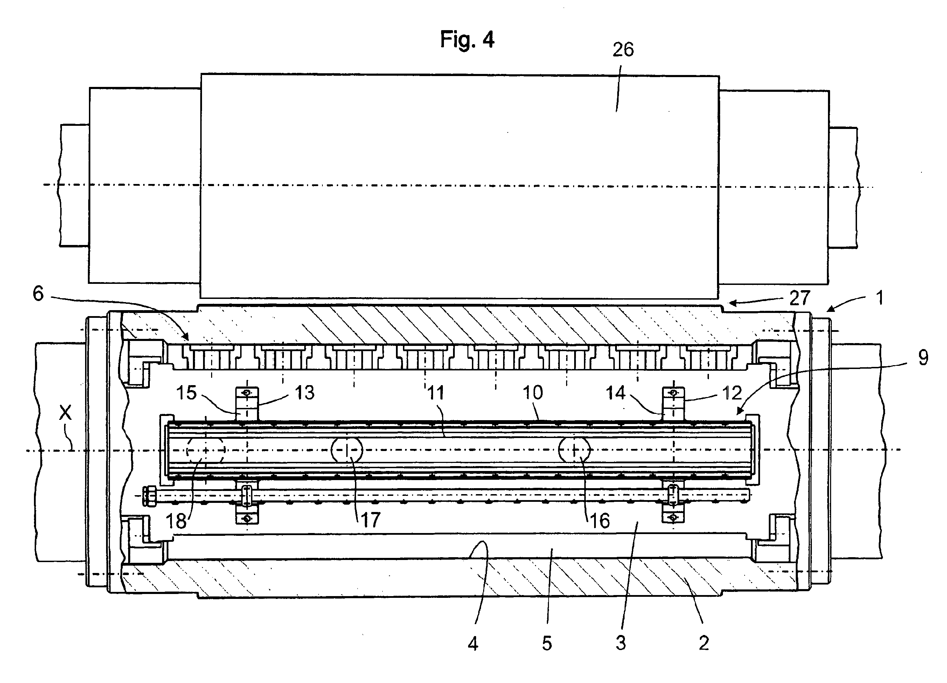

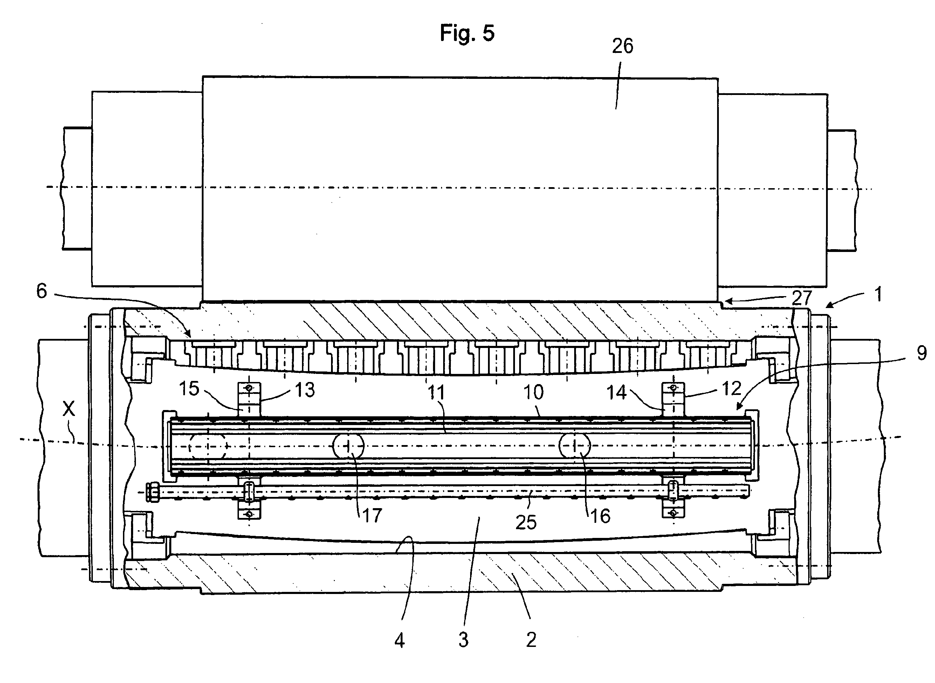

Wie insbesondere Fig. 4 und Fig. 5 zeigen, ist die Flüssigkeitsrückführung 9 über Befestigungsstellen 12, 13 am Träger 3 angeordnet, die an axial endseitigen Abschnitten des Trägers 3 vorgesehen sind.

Die Flüssigkeitsrückführung 9 ist über den Ölrückführkasten 11 an dem Träger 3 befestigt, wozu dieser als ein länglicher Hohlkörper ausgebildet ist.

An den Befestigungsstellen 12, 13 weist der Träger 3 vorzugsweise jeweils eine Halterung 14, 15 auf, die den Ölrückführkasten 11 mit dem Träger verbindet. Der Ölrückführkasten 11 weist kopfseitig Öffnungen 16, 17 auf, über die das gesammelte Öl abgeführt werden kann. Bodenseitig weist der Ölrückführkasten 11 mindestens eine Auslassöffnung 18 auf, die vorzugsweise randseitig vorgesehen ist. Der Ölrückführkasten 11 kann zwischen den beiden Befestigungsstellen 12, 13 an dem Träger 3 geführt sein, beispielsweise durch eine Kulissenführung, so dass der Träger 3 sich in einem mittigen Bereich gegenüber dem Ölrückführkasten 11 verschieben kann.

Das Rakel 10 ist vorzugsweise auf dem Ölrückführkasten 11 befestigt. Das Rakel 10 selbst weist zwei Abstreiflippen 19, 20 auf, die dachförmig eine Sammelkammer 21 oberhalb des Ölrückführkastens 11 begrenzen.

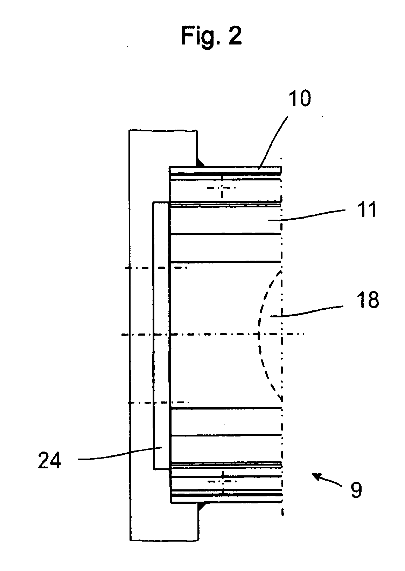

Der Auslassöffnung 18 des Ölrückführkastens 11 ist ein Abfluss 22 zugeordnet. Ein Dichtelement 23 kann zwischen dem Ölrückführkasten 11 und dem Abfluss vorgesehen sein. Gemäß Fig. 2 ist zudem vorzugsweise eine Endabdichtung 24 für den Ölrückführkasten 11 vorgesehen.

An der Flüssigkeitsrückführung 9 kann schließlich noch eine Düse 25 zum Besprühen des Walzenmantelinnenumfangs 4 in Laufrichtung L hinter dem Rakel 10 mit frischem Schmiermittel vorgesehen sein.

Die Fig. 1 zeigt die erfindungsgemäße Durchbiegungseinstellwalze 1 mit einer Gegenwalze 26, die eine harte Walze, eine weiche Walze oder eine Schuhwalze sein kann zur Ausbildung eines Nips 27, in dem eine Warenbahn, insbesondere eine Papier- oder Kartonbahn, mit Druck und gegebenenfalls Temperatur beaufschlagt werden kann. Ist der Nip 27 geöffnet, wie Fig. 4 zeigt, ist die Durchbiegungseinstellwalse 1 unbelastet. Der Träger 3 ist dann gerade und die Walzenachse X verläuft geradlinig.

Wie Fig. 5 zeigt, biegt sich der Träger 3 unter Last bei geschlossenem Nip 27. Die Walzenachse X folgt einer mittleren Biegelinie. Die Durchbiegung des Trägers 3 hat zur Folge, dass der Abstand des Trägers 3 zum Innenumfang 4 in Längsrichtung sich verändert. Dieser Durchbiegung folgt die Flüssigkeitsrückführung 9 nicht. Diese bleibt vielmehr aufgrund der nur randseitigen Festlegung am Träger 3 im Wesentlichen geradlinig. Das Rakel 10 nimmt dann trotz Durchbiegung des Trägers 3, an dem die Flüssigkeitsrückführung 9 befestigt ist, eine gleichmäßige Rakelposition benachbart zum Innenumfang 4 des Walzenmantels 2 ein. Die Positionierung des Rakels 10 bleibt korrekt ausgerichtet zum Innenumfang 4 des Walzenmantels 2, unabhängig davon, ob der Träger 3 gerade oder gebogen ist.

## Patentansprüche

1. Durchbiegungseinstellwalze mit einem drehbaren Walzenmantel (2), der von einem feststehenden Träger (3) durchsetzt ist, einer hydraulischen Lageranordnung (6) zwischen Träger (3) und Walzenmantel (2), die sich an einem Walzenmantelinnenumfang (4) hydrostatisch abstützt, einer Flüssigkeitsversorgung (8), die der Lageranordnung (6) Druck- und/oder Schmierflüssigkeit zuführt, und mit einer am Träger (3) angeordneten Flüssigkeitsrückführung (9), die mindestens ein dem Walzenmantelinnenumfang (4) benachbartes Rakel (10) und einen die abgestreifte Flüssigkeit aufnehmenden Ölrückführkasten (11), der an dem Träger (3) befestigt ist, aufweist, **dadurch gekennzeichnet, dass** die Flüssigkeitsrückführung (9) über Befestigungsstellen (12, 13) am Träger (3) angeordnet ist, die an axial endseitigen Abschnitten des Trägers (3) vorgesehen sind, so dass die Positionierung des Rakels (10), das zwei Abstreiflippen (19, 20) aufweist, die dachförmig eine Sammelkammer (21) oberhalb des Ölrückführkastens (11) begrenzen, korrekt ausgerichtet zum Innenumfang (4) des Walzenmantels (2) bleibt, unabhängig davon, ob der Träger (3) gerade oder gebogen ist und der Ölrückführkasten (11) als länglicher Hohlkörper ausgebildet ist, der kopfseitig Öffnungen (16, 17) aufweist, über die das gesammelte Öl abführbar ist.

2. Durchbiegungseinstellwalze nach Anspruch 1, **dadurch gekennzeichnet, dass** der Träger (3) an den Befestigungsstellen (12, 13) jeweils eine Halterung (14, 15) aufweist, die den Ölrückführkasten (11) mit dem Träger (3) verbindet.

3. Durchbiegungseinstellwalze nach Anspruch 1 oder 2, **dadurch gekennzeichnet, dass** das Rakel (10) auf dem Ölrückführkasten (11) befestigt ist.

## Claims

1. Controlled deflection roll having a rotatable roll shell (2) which is penetrated by a stationary support (3), a hydraulic bearing arrangement (6) between support (3) and roll shell (2), which is supported hydrostatically on a roll shell inner circumference (4), a liquid supply (8), which supplies pressurized and/or lubricating liquid to the bearing arrangement (6), and having a liquid return (9) which is arranged on the support (3) and which has at least one doctor (10) adjacent to the roll shell inner circumference (4) and an oil return box (11) which picks up the liquid wiped off and is fixed to the support (3), **characterized in that** the liquid return (9) is arranged on the support (3) via fixing points (12, 13), which are provided in axial end sections of the support (3), so that the positioning of the doctor (10), which has two wiping lips (19, 20), which, in the form of a roof, delimit a collecting chamber (21) above the oil return box (11), remains correctly aligned with respect to the inner circumference (4) of the roll shell (2), irrespective of whether the support (3) is straight or curved, and the oil return box (11) is formed as an elongated hollow body which has openings (16, 17) on the top side, via which the oil collected can be led away.

2. Controlled deflection roll according to claim 1, **characterized in that**, at the fixing points (12, 13), the support (3) has a mounting (14, 15) in each case, which connects the oil return box (11) to the support (3).

3. Controlled deflection roll according to claim 1 or 2, **characterized in that** the doctor (10) is fixed on the oil return box (11).

## Revendications

1. Rouleau de réglage de flexion avec un manchon (2) mobile en rotation lequel est porté par un support (3) fixe, avec un dispositif de palier hydraulique (6) entre ledit support (3) et ledit manchon (2), qui s'appuie hydrostatiquement sur une surface interne (4) périphérique dudit manchon de rouleau, avec une installation de fourniture de fluide (8) qui conduit du fluide de mise sous pression et/ou de lubrification audit dispositif de palier (6), et avec un circuit retour de fluide (9) agencé sur ledit support (3), et qui comporte au moins une râcle (10) voisine de ladite surface interne (4) périphérique dudit manchon de rouleau, et un carter de remise en circulation d'huile (11) fixé audit support (3) et reprenant le liquide râclé, **caractérisé en ce que** ledit circuit retour de fluide (9) est agencé sur ledit support (3) au niveau d'emplacements de fixation (12; 13), qui sont prévus au niveau de zones d'extrémité axiales dudit support (3), de façon à ce que le positionnement de ladite râcle (10), laquelle comporte deux lèvres de râclage (19; 20) qui limitent à la façon d'un toit une chambre de captage (21) au-dessus dudit carter de recyclage d'huile (11), reste correctement orienté vers ladite surface interne (4) périphérique dudit manchon (2) de rouleau, indépendamment du fait que ledit support (3) est droit ou courbé, et ledit carter de remise en circulation d'huile (11) est agencé comme un corps creux oblong, qui comporte des ouvertures (16; 17) du côté de la tête, à travers lesquelles peut s'écouler l'huile accumulée.

2. Rouleau de réglage de flexion selon la revendication 1, **caractérisé en ce que** ledit support (3) comporte à chacun desdits emplacements de fixation (12; 13), une attache (14; 15) qui relie ledit carter de remise en circulation d'huile (11) audit support (3).

3. Rouleau de réglage de flexion selon la revendication 1 ou 2, **caractérisé en ce que** ladite râcle (10) est fixée sur ledit carter de remise en circulation d'huile (11).
